# EUROPEAN PATENT SPECIFICATION

(11) **EP 3 079 184 B1**
(45) Date of publication and mention of the grant of the patent: **22.11.2017**
(21) Application number: 16156304.4
(22) Date of filing: 18.02.2016
(51) Int. Cl.: H01M 2/10, B60K 1/04

(54) **ONBOARD BATTERY**
BORDBATTERIE
BATTERIE EMBARQUÉE

(30) Priority: 20.02.2015 JP 2015032023
(43) Date of publication of application: 12.10.2016
(73) Proprietor: Toyota Jidosha Kabushiki Kaisha, Toyota-shi, Aichi-ken, 471-8571 (JP)
(72) Inventor: KATAYAMA, Yusuke, Toyota-shi, Aichi-ken, 471-8571 (JP); NAGAMINE, Koichi, Toyota-shi, Aichi-ken, 471-8571 (JP); FUKUSAKO, Naoki, Toyota-shi, Aichi-ken, 471-8571 (JP)
(74) Representative: Winter, Brandl, Fürniss, Hübner, Röss, Kaiser, Polte - Partnerschaft mbB

(56) References cited:
- JP-A- 2013 008 524
- JP-A- 2013 026 111

## Description

### BACKGROUND OF THE INVENTION

### 1. Field of the Invention

The present invention relates to an onboard battery mounted in a vehicle, and particularly, to protection of an onboard battery in collision of a vehicle.

### 2. Description of Related Art

In vehicles, such as hybrid vehicles, equipped with electric motors as motors for driving vehicles, batteries to supply electric power to the electric motors are mounted. The batteries are disposed in front sections of trunks, for example. If vehicles including such batteries are suddenly decelerated, loaded objects in the trunks might forwardly move to collide against the batteries in some cases.

Japanese Patent Application Publication JP 2013-8524 A discloses a technique that provides a battery with a protector to prevent a floor deformed by collision from applying force to electrode terminals of a battery through a case. The protector is so formed as to project more outward than the electrode terminals, thereby preventing the floor and the case from reaching the electrode terminals. The protector is fixed to an end plate stacked together with battery cells, and to a resin frame.

Japanese Patent Application Publication JP 2013-26111 A discloses a technique that provides a pack case accommodating a battery group with stepped portions configured to be so deformable as to absorb impact. If an upper case of the pack case is deformed and comes into contact with the electrode terminals, the stepped portions, which are provided to corresponding portions of the upper case that comes into contact with positive electrode terminals, become deformed to absorb impact.

In JP 2013-8524 A, a resin frame disposed between every adjacent battery cells is used for the purpose of providing the protector to the battery. Consequently, a dimension of the battery in the stacking direction becomes increased by the thickness of the resin frames.

### SUMMARY OF THE INVENTION

The present invention provides an onboard battery capable of suppressing increase in dimension of the battery, and suppressing force to be applied to electrode terminals from a case or the like.

An aspect of the present invention relates to an onboard battery mounted in an vehicle. The onboard battery is mounted in a front section in a space located behind a rearmost seat of the vehicle. The onboard battery includes an assembly battery and a battery case accommodating the assembly battery. Electrode terminals of the battery are arranged on a rear surface of the assembly battery. The battery case includes a case rear-surface member forming a rear surface of the battery case, and is provided with a ridge portion that faces at least a part of the rear surface of the assembly battery in the frontward and rearward direction, and that rises toward the assembly battery. The ridge portion faces the rear surface of the assembly battery in a manner as to avoid the electrode terminals. When the case rear-surface member moves toward the assembly battery, the ridge portion comes into contact with the assembly battery before the case rear-surface member applies force to the electrode terminals.

The ridge portion may face the rear surface of the assembly battery with a distance therebetween, and the case rear-surface member may be fixed at a lower edge of the case rear-surface member to a vehicle body.

The ridge portion may include a slope surface tilting relative to the rear surface of the assembly battery, and, when the slope surface comes into contact with the assembly battery, the slope surface becomes parallel with a surface of the assembly battery in contact with the slope surface.

A lower edge of the slope surface may be located closer to the assembly battery than an upper edge thereof in the frontward and rearward direction.

An angle of rearward inclination of the slope surface of the ridge portion may be 10° to 20°, in particular 10° to 15°, relative to the rear surface of the assembly battery.

By providing the ridge portion in a manner as to avoid the electrode terminals, it is possible to suppress contact of the battery case with the electrodes. The case rear-surface member is fixed at the lower edge thereof to the vehicle body with a distance between the ridge portion and the rear surface of the assembly battery, thereby bringing the case rear-surface member to be forwardly inclined at the moment when a loaded object in the trunk collides against the case rear-surface member. The loaded object in the trunk moves along the case rear-surface member forwardly inclined, thereby reducing impact to be received by the assembly battery.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a side sectional view showing a main part of a rear section of a vehicle;
FIG. 2 is a perspective view showing an onboard battery, particularly an assembly battery and a battery case;
FIG. 3 is a drawing showing a sectional view of the onboard battery; and
FIG. 4 is a sectional view showing a state in which a loaded object in a trunk collides against the onboard battery.

### DETAILED DESCRIPTION OF EMBODIMENTS

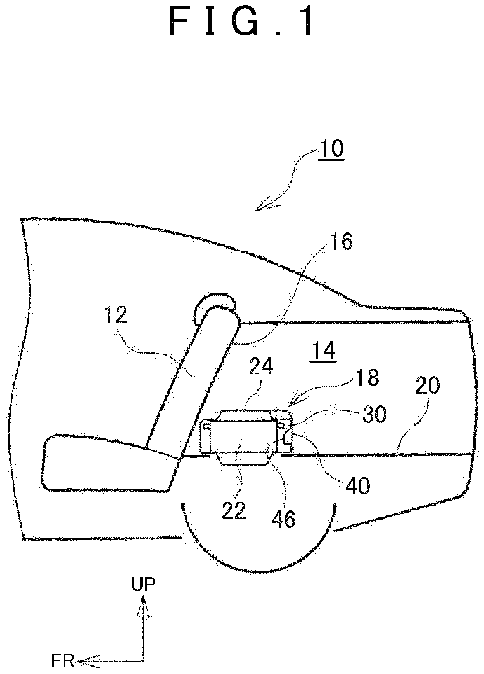

Embodiments of the present invention will be described with reference to drawings hereinafter. FIG. 1 is a side perspective view of a rear section of an vehicle 10 viewed sideward, equipped with an electric motor as a motor for driving a vehicle, such as a hybrid vehicle, and showing a main part of the vehicle 10. In FIG. 1, a direction indicated by an arrow FR represents a frontward direction of the vehicle 10, and a direction indicated by an arrow UP represents an upward direction thereof. In the following drawings, the frontward direction and the upward direction of the vehicle 10 are indicated by using the arrows FR, UP, respectively. In the following description, terms expressing directions and orientations, such as frontward, rearward, right, left, upward, downward, and sideward, denote directions and orientations with reference to the vehicle 10 otherwise mentioned.

The vehicle 10 is a passenger vehicle including front seats (not shown) and rear seats 12. The vehicle 10 further includes a trunk 14 behind the rear seats 12. A back face 16 of each rear seat 12 defines a front end of the trunk 14. A battery 18 is mounted in a front section of the trunk 14. The battery 18 is referred to as an onboard battery 18 hereinafter. A partition wall may be provided between a space where the onboard battery 18 is accommodated and a space where luggage is actually loaded in order to partition these spaces. In such an aspect, the space used for accommodating the onboard battery 18 and the space used for loading the luggage are corresponding to the trunk 14 of the present embodiment. In the present embodiment, a passenger vehicle including front seats and rear seats 12 is exemplified, and a space behind the rear seats 12 is treated as the trunk 14, but in a vehicle including only front seats, the front seats are equivalent to rearmost seats of the vehicle, and thus a space behind the seats is corresponding to the trunk 14. The onboard battery 18 may be disposed immediately behind the rear seats 12, and in FIG. 1, the onboard battery 18 is placed on a floor surface 20 of the trunk 14 (hereinafter, referred to as a trunk floor surface 20). This installation position of the onboard battery 18 is correspondent to a position between wheel houses of right and left rear wheels. The onboard battery 18 includes an assembly battery 22, and a battery case 24 where the assembly battery 22 is accommodated. Electric power is supplied from the onboard battery 18 to the electric motor for driving a vehicle, or the onboard battery 18 is charged with electric power generated by the electric motor through regenerative braking or the like.

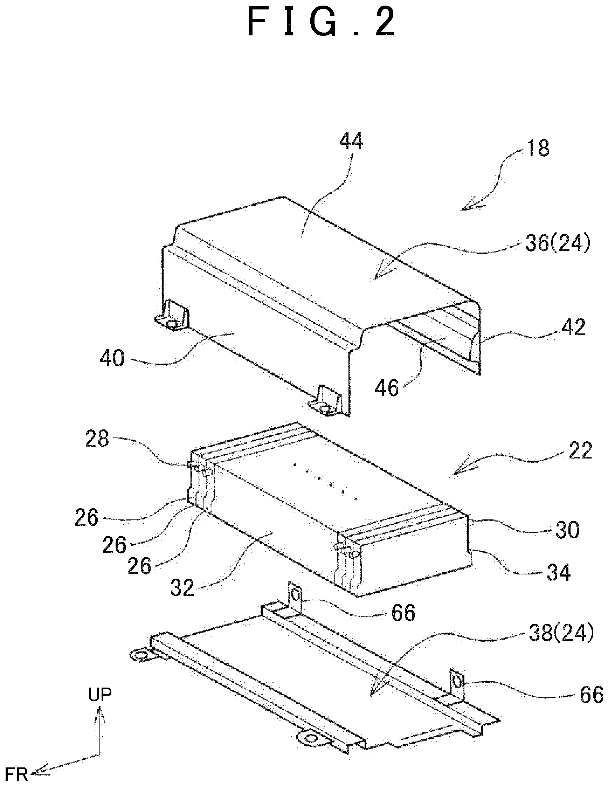

FIG. 2 is an exploded perspective view showing a configuration of a main part of the onboard battery 18. The assembly battery 22 is formed by stacking battery modules 26, each having a substantially rectangular shape with a thickness, in a thickness direction of the battery modules. The stacking direction of the battery modules 26 coincides with the right and left direction when the onboard battery 18 is mounted in the vehicle 10. Each battery module 26 includes plural, for example, six cells connected in series, and generally has a substantially rectangular shape with a thickness. A positive electrode and a negative electrode, and an electrolytic solution are included in each battery module 26, electrode terminals 28, 30 are disposed in a manner as to project from respective surfaces corresponding to shorter sides of the rectangular shape of each battery module 26. Each electrode terminal 28 is a terminal provided to a front shorter side of each battery module, and each electrode terminal 30 is a terminal provided to a rear shorter side of each battery module. Each of the electrode terminals 28 and each of the electrode terminals 30 are connected to respective electrodes at both ends of each cell connected in series in the battery module 26. The assembly battery 22 has a substantially rectangular parallelepiped shape, a surface facing frontward of this rectangular parallelepiped shape is referred to as a front surface 32, and a surface facing rearward thereof is referred to as a rear surface 34. The front surface 32 and the rear surface 34 are substantially perpendicular surfaces. The electrode terminals 28 are arranged at an upper position along an upper edge of the front surface 32, and the electrode terminals 30 are arranged at an upper position along an upper edge of the rear surface 34.

The battery case 24 accommodating the assembly battery 22 includes an upper case 36 and a lower case 38. The upper case 36 is integrally formed of a steel plate, and includes a case front-surface member 40 so located as to face the front surface 32 of the assembly battery 22, a case rear-surface member 42 so located as to face the rear surface 34 thereof, and a case upper-surface member 44 so located as to face an upper surface of the assembly battery 22. The case front-surface member 40 and the case rear-surface member 42 are disposed substantially perpendicularly, and the case upper-surface member 44 is disposed substantially horizontally. The lower case 38 faces a lower surface of the assembly battery 22. The upper case 36 and the lower case 38 form a tube having a substantially rectangular section, and both ends of this tube are closed with not-shown members. The battery case 24 is formed by the members disposed at the both ends of the tube, the upper case 36, and the lower case 38. A ridge portion 46 is provided to an inner side of the case rear-surface member 42, that is, to a surface of the case rear-surface member 42 that faces the rear surface 34 of the assembly battery 22. The ridge portion 46 is disposed in a manner as to avoid the electrode terminals 30, particularly in a manner as to face a portion of the rear surface 34 where the electrode terminals 30 are not disposed, specifically, below the electrode terminals 30. The ridge portion 46 may be so disposed as to extend across an entire range that is substantially the same as a range where the electrode terminals 30 are arranged in the right and left direction. The ridge portion 46 may be disposed in a part of the region where the electrode terminals 30 are arranged, or the ridge portions 46 may be disposed with intervals in the right and left direction.

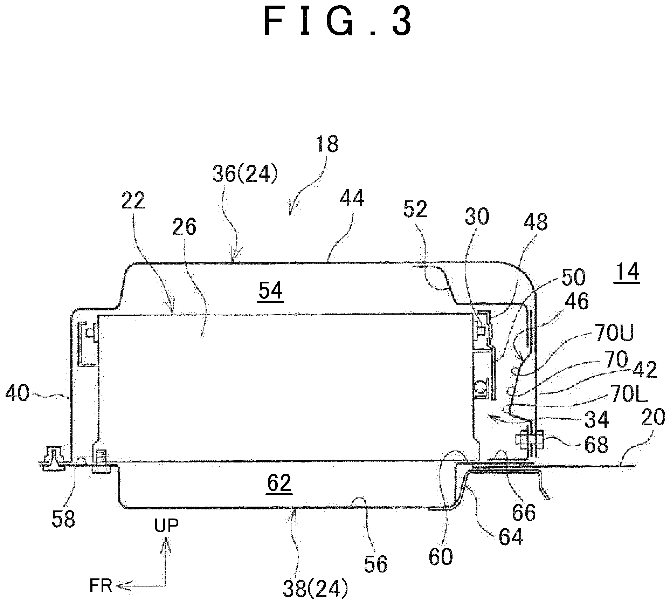

FIG. 3 is a longitudinal sectional view showing a more detailed structure of the onboard battery 18. The assembly battery 22 includes a terminal cover 48 and a wire harness holder 50 that extend in the right and left direction along the rear surface 34. The terminal cover 48 and the wire harness holder 50 may be provided in the entire right and left direction of the assembly battery 22. The terminal cover 48 covers a back side of each electrode terminal 30. The wire harness holder 50 defines a space between the wire harness holder 50 and the battery module 26, and a wire harness to transmit signals to various sensors is held in this space. The terminal cover 48 and the wire harness holder 50 may be formed as an integral resin component, and are attached to the battery modules 26. The rear surface 34 of the assembly battery 22 is formed by rear end surfaces of the battery modules 26, the terminal cover 48, and the wire harness holder 50.

An air guiding plate 52 is fixed to a corner portion defined by the case rear-surface member 42 and the case upper-surface member 44 through welding or the like. A ceiling surface of the upper case 36 formed by the air guiding plate 52 and the case upper-surface member 44 has a substantially protruding shape. The projecting portion in a protruding shape is so disposed to be correspondent to the upper surface of the assembly battery 22, and an upper air guiding passage 54 is formed between the projecting portion and the assembly battery 22. The air guiding plate 52 restricts a region where air flow passes to the upper surface of the battery module 26. The air flow passes through the upper air guiding passage 54 in a direction of penetrating the drawing of FIG. 3, and this air flow cools the assembly battery 22. The lower case 38 has a recessed portion so formed as to be correspondent to the lower surface of the assembly battery 22. There is a distance between a bottom surface 56 of the recessed portion and the lower surface of the assembly battery 22. A front edge and a rear edge of the lower surface of the assembly battery 22 are supported by edge portions 58, 60 of the recessed portion, respectively, and are fixed thereto with bolts or the like. The recessed portion of the lower case 38 defines a lower air guiding passage 62 between the recessed portion and the lower surface of the assembly battery 22. The air flow passes through the lower air guiding passage 62 in the direction of penetrating the drawing of FIG. 3, and this air flow cools the assembly battery 22.

The lower case 38 is fixed to a vehicle body through welding or the like. FIG. 3 illustrates that the lower case 38 is fixed at the edge portion 60 to a cross member 64 of the vehicle body. The lower case 38 is fixed at the other plural positions to the vehicle body. A height of the upper surface of the cross member 64 substantially coincides with a height of the trunk floor surface 20. Hence, a height of the edge portion 60 of the lower case 38, that is, a height of the lower surface of the assembly battery 22 is substantially the same as a level of the trunk floor surface 20.

The upper case 36 and the lower case 38 are joined to each other at the front edges and the rear edges thereof. At the rear edges, a lower edge of the case rear-surface member 42 is joined to plural L-shaped brackets 66 welded to the edge portion 60 of the lower case 38 with bolts 68. The brackets 66 may be integrated with the lower case 38 using a single steel plate. The case rear-surface member 42 is fixed at the lower edge thereof to the vehicle body through the lower case 38 and the brackets 66. The case rear-surface member 42 may be fixed at the lower edge thereof directly to the vehicle body, or may be fixed through brackets directly fixed to the vehicle body. The lower edge of the case rear-surface member 42 is located at substantially the same level as that of the trunk floor surface 20. With respect to the positional relation in the vertical direction, the lower edge of the case rear-surface member 42 and the trunk floor surface 20 are unnecessary to be located at the same height, and the trunk floor surface 20 may be located at a higher level, for example.

The ridge portion 46 is fixed to the case rear-surface member 42 through welding or the like. The ridge portion 46 includes a backwardly slope surface 70 that faces the rear surface 34 of the assembly battery 22. This surface 70 is referred to as a slope surface 70. The slope surface 70 is apart from the rear surface 34, and a lower edge 70L of the slope surface 70 is located closer to the assembly battery 22 than an upper edge 70U thereof in the frontward and rearward direction. The plate member constituting the ridge portion 46 is fixed together with the plate member forming the case rear-surface member to the brackets 66 with the bolts 68.

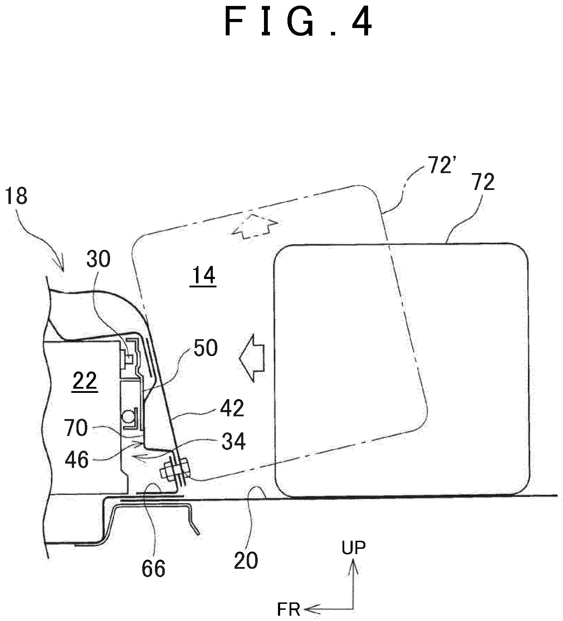

FIG. 4 is a drawing showing a state when a loaded object 72 in the trunk 14 collides against the onboard battery 18. If the vehicle 10 is suddenly decelerated because of a forward collision or the like, the loaded object 72 in the trunk 14 forwardly moves by inertia, and collides against the case rear-surface member 42 of the onboard battery 18 located at the frontward position in the trunk 14. If receiving a great force from the loaded object 72, the case rear-surface member 42 is likely to move in the frontward direction. At this time, the case rear-surface member 42 is fixed at the lower edge thereof, but is not constrained at the upper edge thereof, and there is a gap between the ridge portion 46 and the assembly battery 22; thus the case rear-surface member 42 turns around the lower edge thereof. If the case rear-surface member 42 turns in the forwardly tilting direction, the ridge portion 46 comes into contact with the rear surface 34 of the assembly battery 22, particularly, with the wire harness holder 50 in the present embodiment, and this turning is then stopped. At this time, the terminal cover 48 having received the case rear-surface member 42 or force from the case rear-surface member 42 does not reach the electrode terminal 30, and thus the electrode terminal 30 receives no force. Meanwhile, the portions in contact with each other between the wire harness holder 50 and the slope surface 70 of the ridge portion 46 become substantially parallel with each other in FIG. 4. Accordingly, the wire harness holder 50 can receive force from the ridge portion 46 in a wider range in the vertical direction, thereby suppressing concentration of load.

If the case rear-surface member 42 tilts frontward, the rear surface of the battery case 24 becomes an inclined plane. When the ridge portion 46 comes into contact with the rear surface 34 of the assembly battery 22, an angle of inclination of the case rear-surface member 42 is 10° to 20°, particularly 10° to 15° relative to the perpendicular direction. An angle of rearward inclination of the slope surface 70 of the ridge portion in a normal state is configured to be correspondent to this angle. When the case rear-surface member 42 tilts frontward, the loaded object 72 having collided moves along the rear surface of the battery case 24 inclined as illustrated by a loaded object 72' indicated in a long dashed short dashed line. Accordingly, part of the force at the time of collision of the loaded object 72 is released, thus reducing force to be applied to the onboard battery 18.

Each electrode terminal 30 extends in the inside of each battery module 26; therefore, if a great force is applied to the electrode terminal 30, this force is transferred to the inside of the battery module 26, which may cause damage to the battery module 26. To counter this, each battery module 26 is relatively rigid against an input from the other portions than the electrode terminal 30, and the ridge portion 46 is provided so that the force is received at the other portions than the electrode terminal 30, thereby preventing the battery module 26 from being damaged. In the onboard battery 18, the ridge portion 46 is brought into contact with the wire harness holder 50, thereby distributing the force to be transferred to the battery modules 26. The loaded object 72 does not always uniformly collide in the entire right and left direction of the battery case 24, and if the loaded object 72 collides against a part of the battery case 24, only the ridge portion 46 located in the vicinity of this part comes into contact with the wire harness holder 50. Since the wire harness holder 50 extends in the right and left direction, the wire harness holder 50 transfers the force received from the ridge portion 46 in the right and left direction, thereby transferring this force to as many battery modules 26 as possible. Through this configuration, the force to be received by the single battery module 26 is reduced. By providing the assembly battery 22 with a member like the wire harness holder 50 that extends in the right and left direction, and receives the force from the ridge portion 46, it is possible to distribute the force to as many battery modules 26 as possible.

Another embodiment according to the present invention will be described. An onboard battery according to another embodiment includes an assembly battery and a battery case accommodating the assembly battery. The battery case includes a surface member forming a surface that faces a terminal arrangement surface where electrode terminals of the assembly battery are arranged. This surface member includes a ridge portion rising toward the assembly battery. The ridge portion faces at least a part of the terminal arrangement surface in a manner as to avoid the electrode terminals. At the moment when the surface member including the ridge portion moves toward the assembly battery, the ridge portion comes into contact with the assembly battery before the surface member applies force to the electrode terminals.

## Claims

1. An onboard battery (18) to be mounted in a front section of a space (14) located behind a rearmost seat (12) of a vehicle (10), comprising:
an assembly battery (22) including electrode terminals (30) arranged on a rear surface (34) of the assembly battery (22) in a vehicle frontward and rearward direction; and
a battery case (24) accommodating the assembly battery (22),
**characterized in that**
a case rear-surface member (42) forming a rear surface of the battery case (24) is provided with a ridge portion (46) that faces at least a part of the rear surface (34) of the assembly battery (22) in the vehicle frontward and rearward direction in a manner as to avoid the electrode terminals (30), the ridge portion (46) rising toward the assembly battery (22), and,
when the case rear-surface member (42) is moved toward the assembly battery (22) by an external force, the ridge portion (46) comes into contact with the assembly battery (22) before the case rear-surface member (42) applies force to the electrode terminals (30).

2. The onboard battery (18) according to claim 1, **characterized in that**
the ridge portion (46) faces the rear surface (34) of the assembly battery (22) with a distance therebetween, and the case rear-surface member (42) is fixable at a lower edge of the case rear-surface member (42) to a vehicle body.

3. The onboard battery (18) according to claim 1 or 2, **characterized in that**
the ridge portion (46) includes a slope surface (70) tilting relative to the rear surface (34) of the assembly battery (22), and
when the slope surface (70) comes into contact with the assembly battery (22), the slope surface (70) becomes parallel with a surface of the assembly battery (22) in contact with the slope surface (70).

4. The onboard battery (18) according to claim 3, **characterized in that**
a lower edge (70L) of the slope surface (70) is located closer to the assembly battery (22) than an upper edge (70U) thereof in the frontward and rearward direction.

5. The onboard battery (18) according to claim 3 or 4, **characterized in that**
an angle of rearward inclination of the slope surface (70) of the ridge portion (46) is 10° to 20°, in particular 10° to 15°, relative to the rear surface (34) of the assembly battery (22).

## Patentansprüche

1. Bordbatterie (18), welche in einem vorderen Abschnitt eines hinter einem hintersten Sitz (12) eines Fahrzeugs (10) gelegenen Raums (14) anzubringen ist, mit:
einer Batteriegruppe (22), welche in einer Fahrzeuglängsrichtung auf einer hinteren Fläche (34) der Batteriegruppe (22) angeordnete Elektrodenanschlüsse (30) umfasst; und
einem die Batteriegruppe (22) aufnehmenden Batteriegehäuse (24),
**dadurch gekennzeichnet, dass**
ein eine hintere Fläche des Batteriegehäuses (24) ausbildendes Gehäuserückseitenflächenelement (42) mit einem kammförmigen Abschnitt (46) versehen ist, welcher zumindest einem Teil der hinteren Fläche (34) der Batteriegruppe (22) in der Fahrzeuglängsrichtung in einer Art und Weise gegenübersteht, dass er die Elektrodenanschlüsse (30) meidet, wobei sich der kammförmige Abschnitt (46) zu der Batteriegruppe (22) hin erhebt, und
wenn das Gehäuserückseitenflächenelement (42) durch eine äußere Kraft zu der Batteriegruppe (22) hin bewegt wird, der kammförmige Abschnitt (46) in Kontakt mit der Batteriegruppe (22) kommt, bevor das Gehäuserückseitenflächenelement (42) eine Kraft auf die Elektrodenanschlüsse (30) aufbringt.

2. Bordbatterie (18) nach Anspruch 1, **dadurch gekennzeichnet, dass** der kammförmige Abschnitt (46) der hinteren Fläche (34) der Batteriegruppe (22) mit einem Abstand dazwischen gegenübersteht und das Gehäuserückseitenflächenelement (42) an einem unteren Rand des Gehäuserückseitenflächenelements (42) an eine Fahrzeugkarosserie fixierbar ist.

3. Bordbatterie (18) nach Anspruch 1 oder 2, **dadurch gekennzeichnet, dass**
der kammförmige Abschnitt (46) eine abgeschrägte Fläche (70) umfasst, welche sich relativ zu der hinteren Fläche (34) der Batteriegruppe (22) neigt, und,
wenn die abgeschrägte Fläche (70) in Kontakt mit der Batteriegruppe (22) kommt, die abgeschrägte Fläche (70) parallel zu einer mit der abgeschrägten Fläche (70) in Kontakt stehenden Fläche der Batteriegruppe (22) wird.

4. Bordbatterie (18) nach Anspruch 3, **dadurch gekennzeichnet, dass** eine untere Kante (70L) der abgeschrägten Fläche (70) in der Längsrichtung näher an der Batteriegruppe (22) gelegen ist als deren obere Kante (70U).

5. Bordbatterie (18) nach Anspruch 3 oder 4, **dadurch gekennzeichnet, dass** ein Winkel einer Rückwärtsneigung der abgeschrägten Fläche (70) des kammförmigen Abschnitts (46) in Bezug auf die hintere Fläche (34) der Batteriegruppe (22) 10° bis 20°, insbesondere 10° bis 15° beträgt.

## Revendications

1. Batterie embarquée (18) destinée à être montée dans une partie avant d'un espace (14) situé derrière un siège le plus en arrière (12) d'un véhicule (10) comprenant :
une batterie d'assemblage (22) comprenant des bornes d'électrodes (30) agencées sur une surface arrière (34) de la batterie d'assemblage (22) dans une direction vers l'avant et vers l'arrière d'un véhicule ; et
un boîtier de batterie (24) recevant la batterie d'assemblage (22),
**caractérisé en ce que**
un élément de surface arrière de boîtier (42) formant une surface arrière du boîtier de batterie (24) est prévu avec une partie de crête (46) qui fait face à au moins une partie de la surface arrière (34) de la batterie d'assemblage (22) dans la direction vers l'avant et vers l'arrière d'un véhicule de manière à éviter les bornes d'électrodes (30), la partie de crête (46) s'élevant vers la batterie d'assemblage (22), et,
lorsque l'élément de surface arrière de boîtier (42) est déplacé vers la batterie d'assemblage (22) par une force externe, la partie de crête (46) entre en contact avec la batterie d'assemblage (22) avant que l'élément de surface arrière de boîtier (42) n'applique une force aux bornes d'électrodes (30).

2. Batterie embarquée (18) selon la revendication 1, **caractérisée en ce que**
la partie de crête (46) fait face à la surface arrière (34) de la batterie d'assemblage (22) avec une distance entre elles, et l'élément de surface arrière de boîtier (42) peut être fixé au niveau d'un bord inférieur de l'élément de surface arrière de boîtier (42) contre un corps de véhicule.

3. Batterie embarquée (18) selon la revendication 1 ou 2, **caractérisée en ce que**
la partie de crête (46) comprend une surface de pente (70) s'inclinant par rapport à la surface arrière (34) de la batterie d'assemblage (22), et
lorsque la surface de pente (70) entre en contact avec la batterie d'assemblage (22), la surface de pente (70) devient parallèle à une surface de la batterie d'assemblage (22) en contact avec la surface de pente (70).

4. Batterie embarquée (18) selon la revendication 3, **caractérisée en ce que**
un bord inférieur (70L) de la surface de pente (70) est situé plus près de la batterie d'assemblage (22) qu'un bord supérieur (70U) de celle-ci dans la direction vers l'avant et vers l'arrière.

5. Batterie embarquée (18) selon la revendication 3 ou 4, **caractérisée en ce que**
un angle d'inclinaison vers l'arrière de la surface de pente (70) de la partie de crête (46) est de 10° à 20°, en particulier de 10° à 15°, par rapport à la surface arrière (34) de la batterie d'assemblage (22).
